Europäisches Patentamt

European Patent Office

Office européen des brevets

(11) Veröffentlichungsnummer: **0 000 689**
A1

# (12) EUROPÄISCHE PATENTANMELDUNG

(21) Anmeldenummer: 78100108.6

(22) Anmeldetag: 06.06.78

(51) Int. Cl.²: **B 41 F 33/00**, G 01 B 11/06

(30) Priorität: 13.08.77 DE 2736663

(43) Veröffentlichungstag der Anmeldung:
21.02.79 Patentblatt 79/4

(84) Benannte Vertragsstaaten:
BE CH DE FR GB NL SE

(71) Anmelder: HEIDELBERGER DRUCKMASCHINEN
AKTIENGESELLSCHAFT
Alte Eppelheimer Strasse 15-21
D-6900 Heidelberg(DE)

(72) Erfinder: Jeschke, Willi
Berghalde 68
D-6900 Heidelberg(DE)

(74) Vertreter: Stoltenberg, Baldo H.H.
Alte Eppelheimer Strasse 15-21
D-6900 Heidelberg(DE)

(54) Vorrichtung und Verfahren zur Überwachung des Feucht-und Farbgleichgewichts bei Offsetdruckwerken.

(57) Mit einer Vorrichtung zur Überwachung des Feuchtmittel- und Farbgleichgewichts bei Offsetdruckwerken wird die Flüssigkeitsfilmdicke auf einer Meßwalze (14) gemessen, die zwischen der letzten Feucht- (11) und der ersten Farbauftragwalze (12) angeordnet ist. Die Meßwalze (14) ist zumindest teilweise hydrophil. Je nach angewendetem Meßverfahren liegt die Meßwalze ständig an den benachbarten Auftragwalzen (11, 12) an oder sie wird im Wechsel an die Feucht- (11) und an die Farbauftragwalzen (12) angelegt. Mit Hilfe einer Lichtquelle (16), einem Meßfotoempfänger (18), einem Vergleichsfotoempfänger (19) sowie je einem Filter (20 bzw. 24) im Meß- und Vergleichsstrahlengang kann die auf der Meßwalze (14) jeweils vorhandene Flüssigkeitsschicht zur Bestimmung des Feuchtmittel- und Farbgleichgewichts auf der Platte herangezogen werden.

Fig. 2

Die Erfindung betrifft eine Vorrichtung zur Überwachung des Feucht- und Farbgleichgewichts bei Offsetdruckwerken mit einer im Feuchtmittel- bzw. Farbstrom liegenden Meßwalze, deren Flüssigkeitsfilmdicke gemessen wird.

Auf die mit Offsetdruckwerken erzielbare Druckqualität hat das richtige Mengenverhältnis von Feuchtflüssigkeit und Farbe auf der Offsetdruckplatte einen wesentlichen Einfluß. Vom Drucker wird viel Geschick und zeitlicher Aufwand abverlangt, dieses optimale Verhältnis von Feuchtflüssigkeitszufuhr und Farbgebung herzustellen und aufrechtzuerhalten. Hierbei stehen ihm allerdings bei modernen Offsetdruckwerken Einrichtungen zur Messung der einzelnen Komponenten -also Farbe und Feuchtmittel- zur Seite.

Aus der DT-AS 2 412 234 ist zum Beispiel bekannt, unmittelbar vor der ersten Farbauftragswalze mittels Reflexionsmeßverfahrens die Feuchtfilmdicke an der Offsetplatte zu messen. Die Messung erfolgt durch Anstrahlen der benetzten Druckplatte mit Infrarotlicht. Die dabei auftretende Reflexion des infraroten Lichtes ist jedoch nicht nur von der Feuchtfilmdicke abhängig, sondern wird auch stark von der Struktur der Plattenoberfläche, bzw. der Plattenart beeinflußt. Die gewonnenen Ergebnisse können daher bei verschiedenen Offsetplatten beträchtlich voneinander abweichen und damit zu Fehlinterpretationen der Meßwerte führen. So macht z.B. der Glanz mancher Offsetplatten eine Feuchtfilmmessung auf diese Art unmöglich.

Um dieser Schwierigkeit aus dem Wege zu gehen, ist bereits vorgeschlagen worden, im Kanal des Plattenzylinders eine Referenzfläche vorzusehen, die ebenfalls von den Feuchtauftragswalzen benetzt wird. Durch Reflexions-

- 2 -

messung könnten dann an dieser Stelle Veränderungen des Feuchtfilms wahrgenommen werden, die repräsentativ für den Feuchtfilm auf der Offsetplatte sind. Neben dem Nachteil, daß diese Referenzfläche Störungen an den Farbwalzen herbeiführen kann, ist diese Methode nur bei Bogenoffsetmaschinen möglich, bei denen ein genügend breiter Kanal verfügbar ist. Bei Rollenoffsetmaschinen, die bekanntlich keinen Kanal aufweisen, scheidet das Messen mittels Referenzfläche im Kanal daher aus.

Messungen des Feuchtfilms unmittelbar am Plattenzylinder haben aber vor allem den Nachteil, daß nur der Feuchtfilm allein gemessen wird. Die Wechselwirkung Farbe-Wasser wird nicht genügend erfaßt. Zwar überrollen die Farbwalzen den Plattenzylinder und beeinflussen somit auch die Feuchtfilmdicke auf den nichtdruckenden Stellen, wenn der Feucht film z.B. nach dem Einfärben gemessen wird; man erhält jedoch keine Aussage über den Grad der Wasseraufnahme im Farbwerk. Das Feucht- und Farbgleichgewicht wird daher nur ungenügend beurteilt.

Zweck der Erfindung ist, den Farb- und den Feuchtfilm bzw. deren gegenseitiges Verhalten zur Ermittlung des Gleichgewichts an einer solcher Stelle zu messen, an der die schädlichen Einflüsse der Offsetdruckplatte durch deren Reflexe auf das Meßgerät ausgeschaltet sind.

Im engeren Sinne besteht nun die technische Aufgabe der Erfindung darin eine sehr wirtschaftliche, zuverlässige Meßvorrichtung zu finden, die bei geringstem Aufwand ohne Beeinträchtigung durch die Offsetplatte sowohl den Farbfilm als auch den Feuchtfilm bestimmt, ohne daß eine feststellbare Störung der Einfärbung stattfindet.

Erfindungsgemäß ist nur eine einzige Meßwalze vorgesehen, die an eine

- 3 -

der Feuchtauftragswalzen anstellbar ist, wobei zumindest bestimmte Bereiche der Mantelfläche der Meßwalze hydrophil ausgebildet sind.

Die Erfindung macht von der Erkenntnis Gebrauch, daß im wesentlichen die Benetzbarkeit einer Oberfläche durch das Feuchtmittel das Maß der Verdrängung von Farbe bestimmt und daher eine einzige Meßwalze sowohl zur Bestimmung der Farbzufuhr als auch zur Messung der Feuchtmittelzufuhr verwendet werden kann.

Eine besonders vorteilhafte Weiterbildung der Erfindung besteht darin, daß die Meßwalze gleichzeitig an einer Farbwalze und an einer auch Farbe führenden Feuchtwalze anliegt, wobei die Meßwalze selbst aus Glas hergestellt ist. Grundsätzlich kann jedes durch Farbe und Feuchtmittel benetzbare Material für die Meßwalze verwendet werden. Ist das Material nicht transparent, wird im Reflexionsverfahren gemessen. Ein im sichtbaren und infraroten Bereich durchlässiges Material, wie z.B. Glas, hat jedoch den Vorteil, daß man die Schichtdicken im Durchlichtverfahren messen kann.

Durch die britische Patentschrift 1 226 487 ist zwar schon bekannt, eine transparente Walze zur Bestimmung der Farbfilmdicke im Durchlichtverfahren anzuwenden, es wird jedoch kein Hinweis hinsichtlich der Messung des Feuchtfilms gegeben.

Eine mit einfachen Mitteln die Farb- und Feuchtfilmdicke erfassende Weiterbildung der Erfindung besteht darin, die Meßwalze verschwenkbar zu lagern, so daß diese alternierend an der letzten Feuchtauftragswalze sowie an der ersten Farbauftragswalze anliegen kann und daß die Mantelfläche der Meßwalze durch einen nicht benetzbaren in axialer Richtung verlaufen-

- 4 -

den Bereich, z. B. einen Einschnitt bzw. Feld mit geringer Transparenz unterbrochen ist.

Bei dieser Meßvorrichtung wird der Benetzungswechsel der Meßwalze zur Messung ausgenutzt. Für eine bestimmte Farbe und das dazugehörige Feuchtmittel läßt sich nämlich ein eindeutiger Zusammenhang zwischen der Farb- bzw. Feuchtschichtdicke einerseits und der Anzahl der Umdrehungen der Meßwalze andererseits bis zur vollständigen, nicht mehr zunehmenden Benetzung feststellen. Nach einem Wechsel der Meßwalze von der Anlage an die farbführende Auftragswalze des Farbwerkes zur Anlage an die feuchtmittelführende Auftragswalze des Feuchtwerkes wird es bei geringem Angebot an Feuchtmittel relativ lange dauern, bis die Mantelfläche der Meßwalze wieder frei von Farbe wird. Im Gegensatz dazu wird bei reichlichem Feuchtmittelangebot die Farbe sehr rasch von der Meßwalzenoberfläche wegtransportiert, bis diese dann im weiteren Verlauf des Anliegens schließlich völlig mit Feuchtmittel in nicht mehr zunehmender Schichtdicke benetzt ist.

Zählt man die Anzahl der Umläufe der Meßwalze von Beginn des Anlagewechsels bis zur gleichbleibenden Benetzung mit Feuchtmittel, bzw. stellt man die Zeitkonstante des Übergangsverhaltens fest, so hat man damit ein Maß für die angebotenen Schichtdicken. Eine solche Vorrichtung macht die Messung der Feuchtmittel- und Farbschichtdicke in absoluter Größe auf der Oberfläche der Meßwalze überflüssig. Es reicht aus, wenn man bei dem oben beschriebenen Vorgehen im Durchlicht oder Auflicht feststellt, wie rasch sich der Farbfilm in einen Feuchtfilm umwandelt. Auch die Dauer des umgekehrten Vorgangs vom Beginn des Anliegens der mit Feuchtmittel benetzten Meßwalze bis zur konstant bleibenden Einfärbung bzw. die in einer Zeiteinheit eintretende Einfärbung ist ein Maß für das Feucht- und Farbgleichgewicht.

Eine sehr einfache Ausgestaltung der Erfindung sieht vor, daß die Mantelfläche der Meßwalze hydrophile und oleophile Bereiche aufweist. Beispielsweise kann in Umfangsrichtung gesehen, die Mantelfläche der Meßwalze je zur Hälfte aus hydrophilem und oleophilem Material bestehen. Diese Meßwalze liegt gleichzeitig sowohl an einer farbführenden Walze an als auch an einer feuchtmittelführenden, wobei die hydrophilen Flächenanteile das Feuchtmittel und die oleophilen Flächenanteile die Farbe annehmen. Die Feuchtfilmdicke wird dann mittels reflektierter Strahlen mit Hilfe von Infrarotdetektoren auf dem hydrophilen Mantelflächenbereich und die Farbfilmdicke mit Hilfe eines Fototransistors auf dem oleophilen Mantelflächenbereich gemessen. Der hydrophile Mantelbereich kann beispielsweise aus Chrom, der oleophile aus Kupfer bestehen.

Die Erfindung wird im folgenden anhand einiger Ausführungsformen näher beschrieben. Es zeigt:

Fig. 1   schematisch ein Offsetdruckwerk mit einem Durchlichtmeßgerät nach der Erfindung,

Fig. 2   dieses Durchlichtmeßgerät in vergrößertem Maßstab,

Fig. 3   eine wechselweise an die letzte Feucht- und erste Farbauftragwalze anstellbare Meßwalze,

Fig. 4   den allgemeinen Verlauf des Meßsignals,

Fig. 5   die Meßsignale verschiedener Filmdicken,

Fig. 6   die Markierung der Meßwalzenumläufe im Meßsignal,

Fig. 7   die Filmdicken-Meßsignale in Abhängigkeit vom Farb- Feuchtmittelmengenverhältnis,

- 6 -

Fig. 8    die beidseitig anliegende Meßwalze mit teils aus hydrophilem und teils aus oleophilem Mantelflächenbereich.

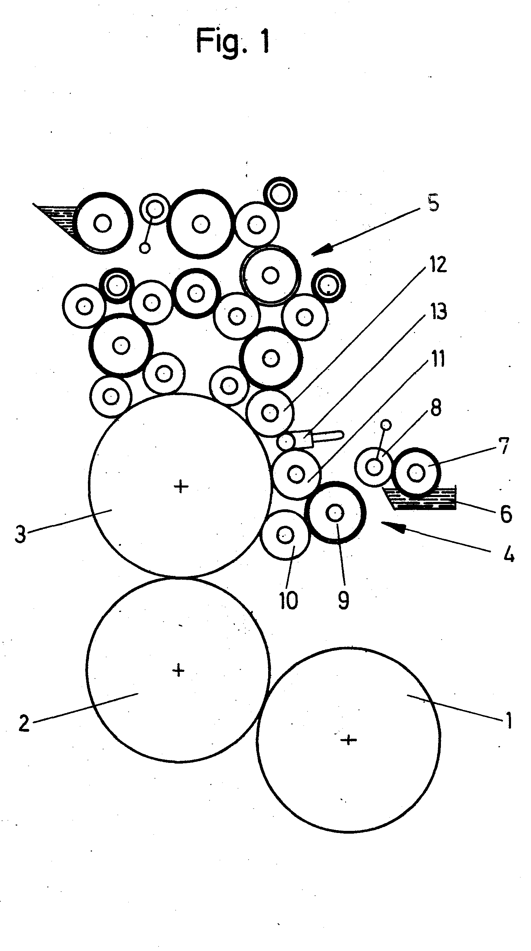

Bei dem Druckwerk gemäß Fig. 1 handelt es sich um ein Offsetdruckwerk mit Gegendruckzylinder 1, Gummituchzylinder 2, Plattenzylinder 3, Feuchtwerk 4 und Farbwerk 5. Das Feuchtwerk 4 besteht aus dem Feuchtmittelbehälter 6, dem Feuchtduktor 7, dem Feuchtheber 8, dem Feuchtreiber 9, der ersten Feuchtauftragwalze 10 und der zweiten Feuchtauftragwalze 11.

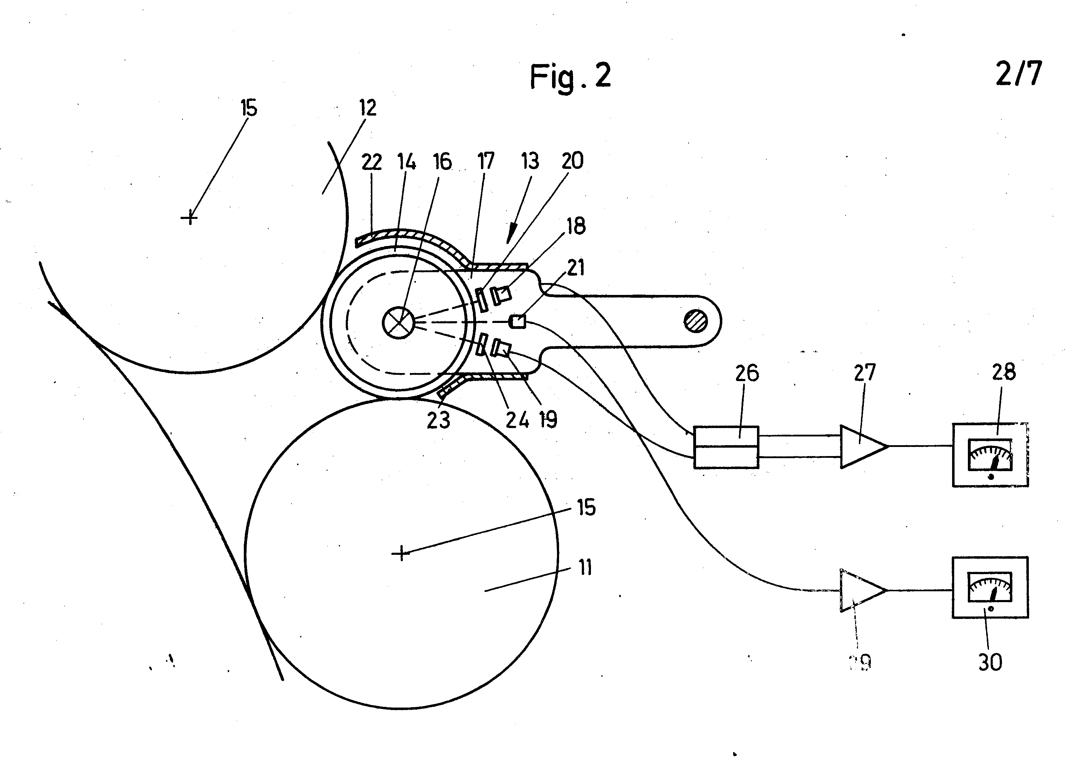

Zwischen der zweiten Feuchtauftragwalze 11 und der ersten Farbauftragwalze 12 des Farbwerkes 5 ist ein Meßkopf 13 angeordnet. Wie Fig. 2 im einzelnen zeigt, befindet sich in diesem Meßkopf 13 eine Meßwalze 14, deren Drehachse parallel zu den Drehachsen 15 der beiden Feuchtauftragwalzen und den Farbauftragwalzen verläuft. Der Meßkopf 13 ist derart verstellbar angeordnet, daß der Anpreßdruck der Meßwalze 14 an die Feuchtauftragwalze 11 und die Farbauftragwalze 12 eingestellt werden kann. Die Meßwalze 14 besteht aus Glas oder ähnlichem transparentem Material. In ihrem Inneren befindet sich eine Strahlungsquelle 16.

Im Gehäuse 17 des Meßkopfes 13 sind ein Infrarotdetektor für den Meßstrahl 18 und darüber ein weiterer Infrarotdetektor für den Vergleichsstrahl 19 vorgesehen. Beiden Infrarotdetektoren 18 und 19 ist in radialer Richtung von der Strahlungsquelle 16 aus gesehen je ein Filter 20 bzw. 24 vorgelagert. Zwischen den beiden Infrarotdetektoren 18 und 19 befindet sich ein Farbtransistor 21 zur Farbbestimmung. Die Infrarotdetektoren 18 und 19 sind durch die gläserne Walze hindurch sowie durch die Filter 20 bzw. 24 und der Farbtransistor ohne Zwischenschaltung eines Filters durch die Strahlen der Strahlungsquelle 16 beaufschlagbar. Eine obere Blende 22 und eine untere Blende 23 verlaufen in einem gewissen Abstand konzentrisch zur gläsernen Meßwalze 14 und schirmen so die Detektoren gegen Streulicht ab. Beide Blenden 22 und 23 sind am Gehäuse 14 des Meßkopfes 13 befestigt.

Die Infrarotdetektoren sind über Impedanzwandler 26 und Rechenverstärker 27 elektrisch an eine Anzeigevorrichtung zur Anzeige der Feuchtfilmdicke angeschlossen. Das Meßsignal des Fototransistors 21 wird vom Verstärker 29 verstärkt einer weiteren Anzeigevorrichtung 30 für die Farbe übermittelt.

Die Wirkungsweise der beschriebenen Meßvorrichtung ist folgende:

Beim Abrollen der gläsernen Meßwalze 14 (Fig. 2) auf dem elastischen Belag der zweiten Feuchtauftragwalze 11 wird bei normaler Feuchtung ein Flüssigkeitsfilm abgenommen, während die sich auf der Mantelfläche der Feuchtauftragwalze 11 und der Farbauftragwalze 12 befindende Farbschicht nicht abgenommen wird. Die im Zentrum der Meßwalze 14 vorgesehene Strahlungsquelle 16 sendet einen Anteil von Infrarotstrahlen aus, der durch die transparente Wandung der Meßwalze 14 und den Feuchtfilm hindurch über die beiden Filter 20 bzw. 24 die Infrarotdetektoren 18 und 19 beaufschlagt. Dabei werden entsprechend der Dicke des Feuchtfilms Infrarotstrahlen von beispielsweise einer Wellenlänge von $\lambda$ = 2,93 µm zum größten Teil absorbiert und können somit zur Bestimmung der Feuchtfilmdicke herangezogen werden.

Das schmalbandige Interferenzfilter 20 vor dem Infrarotdetektor 18 läßt nur einen bestimmten Meßstrahl aus dem Strahlenspektrum der Strahlungsquelle 16 hindurch. Mit wachsender Stärke des Feuchtfilms

- 8 -

wird die auf den Infrarotdetektoren wirkende Strahlungsintensität geringer und man erhält eine Widerstandsänderung. Da sich der Widerstand des Infrarotdetektors auch mit der Temperatur der Umgebung ändert und außerdem die Intensität der Strahlungsquelle 16 nicht konstant bleibt, muß man für die Messungen ein Bezugspotential schaffen. Zu diesem Zweck ist ein Vergleichsstrahl einer Wellenlänge vorgesehen, die vom Wasser nur schwach absorbiert wird. Dieser Vergleichsstrahl beaufschlagt über das Filter 24 den Infrarotdetektor 19. Beide Strahlen - Meßstrahl und Vergleichsstrahl - liegen in der Wellenlänge dicht nebeneinander, damit sie die gleiche Änderung durch Störungen der genannten Art erfahren, im Vergleich also lediglich die Schichtdickenänderungen wirksam das Meßsignal verändern.

Die mit konstanter Spannung versorgten Infrarotdetektoren 18 und 19 liefern Signale, die über den Impedanzwandler 16 verstärkt einem vergleich den Rechenverstärker 27 zugeführt werden. Die Ausgangsspannung dieses Rechenverstärkers 27 ist proportional der Feuchtfilmdicke auf der Meßwalze 14 und wird in der Anzeigevorrichtung 28 dem Drucker angezeigt.

Bei zu geringer Feuchtung setzt sich bekanntlich die Offsetplatte mit Farbe zu. Damit ist das Feucht-Farbgleichgewicht entschieden gestört.

In diesem Falle wird sowohl über die Farbauftragwalze 12 als auch über die Feuchtauftragwalze 11 Farbe auf die Meßwalze 14 übertragen, wodurch die Intensität des Meßsignals vermindert wird. Der zusätzlich im Gehäuse 17 des Meßkopfes 13 angeordnete Fototransistor 21 liefert dann ein im unmittelbaren Spektralbereich gemessenes Signal, welches über einen Verstärker 29 auf einer Anzeigevorrichtung 30 das Vorhandensein von Farbe auf der Meßwalze anzeigt.

- 9 -

Wird die Zufuhr an Feuchtmittel daraufhin gesteigert, läuft die Meßwalze wieder von Farbe frei. Die Anzeigevorrichtung 30 zeigt nun die Abwesenheit eines Farbfilms auf der Oberfläche der Meßwalze 14 an. Die Anzeigevorrichtung 28 gibt die Dicke des neuen Feuchtfilms eindeutig wieder.

In normaler Arbeitsstellung mißt die Meßwalze 14 lediglich die Dicke des Feuchtfilms auf der Meßwalze äquivalent dem Feuchtfilm auf der zweiten Feuchtauftragwalze 11 und zeigt außerdem bei zu geringer Feuchtung das Tonen an. Versuche haben gezeigt, daß die Farbannahme an der Meßwalze gleichzeitig mit dem Tonen bzw. sogar früher als an der Offsetplatte stattfindet.

Dies ist leicht erklärlich, da die Meßwalze mit dem unverbrauchten Farbfilm der ersten Farbauftragwalze und mit dem gewissermaßen verbrauchten Feuchtfilm der Feuchtauftragwalze in Berührung steht. Der Einfluß der Farbe ist stärker.

Stellt man die Meßwalze 14 an die beiden Auftragwalzen derart an, daß die Mantelfläche der Meßwalze 14 zunächst mit der Farbauftragwalze 12 und dann erst mit der Feuchtauftragwalze 11 in Berührung kommt - der Meßkopf 13 ist also geringfügig abgestellt - so wird der Kontakt zur zweiten Feuchtauftragwalze unterbrochen, ohne daß der Kontakt mit der Farbauftragwalze 12 aufgehoben wird. In dieser Einstellung kann nach einer Übergangsphase, in der die Meßwalze Farbe annimmt, die absolute Farbschichtdicke auf der Farbauftragwalze, repräsentiert durch die aufgebaute Farbschichtdicke auf der Meßwalze mit Hilfe des Fototransistors 21, des Verstärkers 29 und der Anzeigevorrichtung 13 zur Anzeige gebracht werden.

- 10 -

Mit der beschriebenen Meßvorrichtung vermag der Drucker sowohl die Farb- als auch die Feuchtmittelzufuhr zu beruteilen und einzuregeln.

Die beschriebene Ausführungsform gemäß Fig. 1 und Fig. 2 kann mannigfache Abwandlung erfahren. Beispielsweise lassen sich zur Aufnahme des Meßsignals die Infrarotstrahlungsquelle und die Infrarotdetektoren lokal vertauschen. Auch besteht die Möglichkeit, den Wirkungsgrad der Strahlung durch eine Optik zu verbessern. Vorzugsweise besteht die Meßwalze 14 aus einem Material mit einer großen Transmission für Infrarotstrahlen und weist nur geringe Formabweichungen auf. Am besten eignet sich für die Meßwalze ein Quarzglas. Zur Verstärkung des Meßsignals ist auch ein Wechselspannungsverstärker möglich, wobei dann allerdings die Strahlen zerhackt werden müssen.

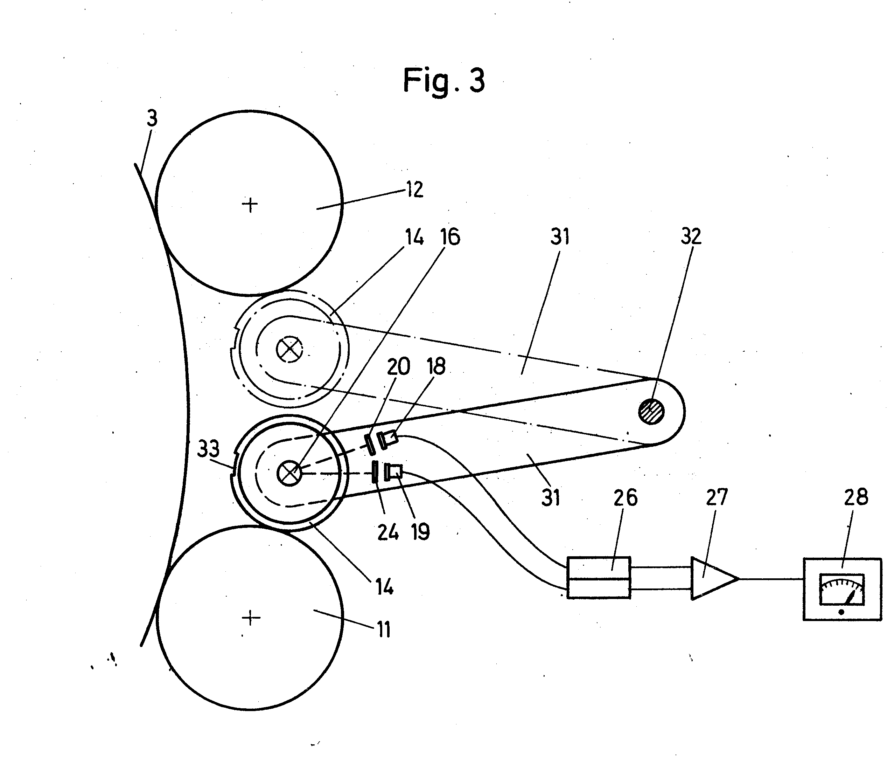

Eine weitere Ausgestaltung der Erfindung zeigt. Fig. 3. Die transparente Meßwalze 14 ist drehbar an einem Schwenkhebel 31 angebracht, der um die Schwenkachse 32 derart verschwenkbar ist, daß die Meßwalze 14 wahlweise an die Feuchtauftragwalze 11 oder an die Farbauftragwalze 12 angelegt werden kann. Am Schwenkhebel sind die Infrarotdetektoren 18 und 19 sowie die denen vorgelagerten Filter 20 und 24 angebracht. Innerhalb der Meßwalze 14 befindet sich die Strahlungsquelle 16. Die Infrarotdetektoren 18 und 19 sind in der gleichen Weise wie in Ausführungsform gemäß Fig. 2 beschrieben über den Impedanzwandler 26 und den Rechenverstärker 27 elektrisch verknüpft an das Anzeigegerät 16 angeschlossen. Der Mantel der Meßwalze 14 weist einen in axialer Richtung sich erstreckenden Kanal 33 auf, wodurch die den Feucht- bzw. Farbfilm aufnehmende Mantelfläche der Meßwalze 14 unterbrochen ist. Der Kanal ist mit einer opaken, also strahlungsundurchlässigen Schicht überzogen.

- II -

Gemäß der ausgezogenen Darstellung in Fig. 3 befindet sich die Meßwalze 14 zunächst in der unteren Arbeitsstellung, d. h., sie liegt an der zweiten Feuchtauftragwalze 11 an. Ihre Mantelfläche ist daher mit einem dem Beharrungszustand entsprechenden Feuchtmittelfilm mit einer bestimmten Schichtdicke benetzt. Schwenkt man nun die Meßwalze 14 in die obere Arbeitsstellung und legt sie gegen die erste Farbauftragwalze an, so wird sie nicht mehr mit Feuchtmittel aus dem Feuchtwerk versorgt, der verbliebene Feuchtmittelfilm wird von der Farbauftragwalze 12 aufgenommen und abtransportiert. Nach einer gewissen Zeit bzw. Zahl von Meßwalzenumläufen ist unter gleichzeitiger Einwirkung der Verdunstung der Feuchtfilm auf der Meßwalze soweit abgebaut, daß deren Einfärbung durch die angebotene Farbe beginnt. Nach einigen weiteren Umdrehungen ist diese soweit fortgeschritten, daß ein neuer Beharrungszustand mit gleichbleibender Farbschichtdicke eingetreten ist.

Mit Hilfe des Kanals 33 besteht nun die Möglichkeit, die Zahl der Umdrehungen der Meßwalze vom Zeitpunkt der Umschaltung von der uríeren Arbeitsstellung in die obere Stellung an bis zum Beginn der Einfärbung und darüber hinaus bis zum Ende der Einfärbung zu messen.

Lag zu Beginn des Vorgangs ein starker Feuchtmittelfilm vor, wird der Zeitpunkt des Beginns der Einfärbung später einsetzen als bei einem schwachen Film.

Damit ist die Anzahl der Umdrehungen bis zum Beginn der Einfärbung ein Maß für die ursprünglich vorhandene Feuchtfilmdicke.

Wie noch später anhand einer Kurve erläutert werden wird. ermöglicht der Kanal 33 aufgrund der kurzen Unterbrechung des eigentlichen Meß-

- 12 -

signals - wegen der Opazität des Kanals entsteht ein Peak - die Zählung der Anzahl der Umdrehungen bis zum Beginn der Einfärbung und darüber hinaus bis zur Beharrung der Benetzung mit Farbe.

Für den umgekehrten Vorgang, d.h. also, für den Wechsel der Meßwalzenanlage von der Farbwalze zur Feuchtwalze gilt Ähnliches. Schwenkt man also die Meßwalze 14 wieder in ihre untere Arbeitsstellung, wobei ihre mit Farbe gesättigte Mantelfläche an die der Feuchtwalze angelegt wird. läuft die Meßwalze zunächst von Farbe frei bis sich danach wieder ein Feuchtfilm aufbaut. Je nach vorhandener Farbschichtdicke und angebotener Feuchtfilmstärke ist die Anzahl der Umläufe bis zum Freilaufen von Farbe ein Maß für das Mengenverhältnis von Feuchtmittel und Farbe. Das Meßsignal wird auch hier wieder bei jeder Umdrehung durch den Kanal 33 kurzzeitig unterbrochen und durch einen Peak ersetzt.

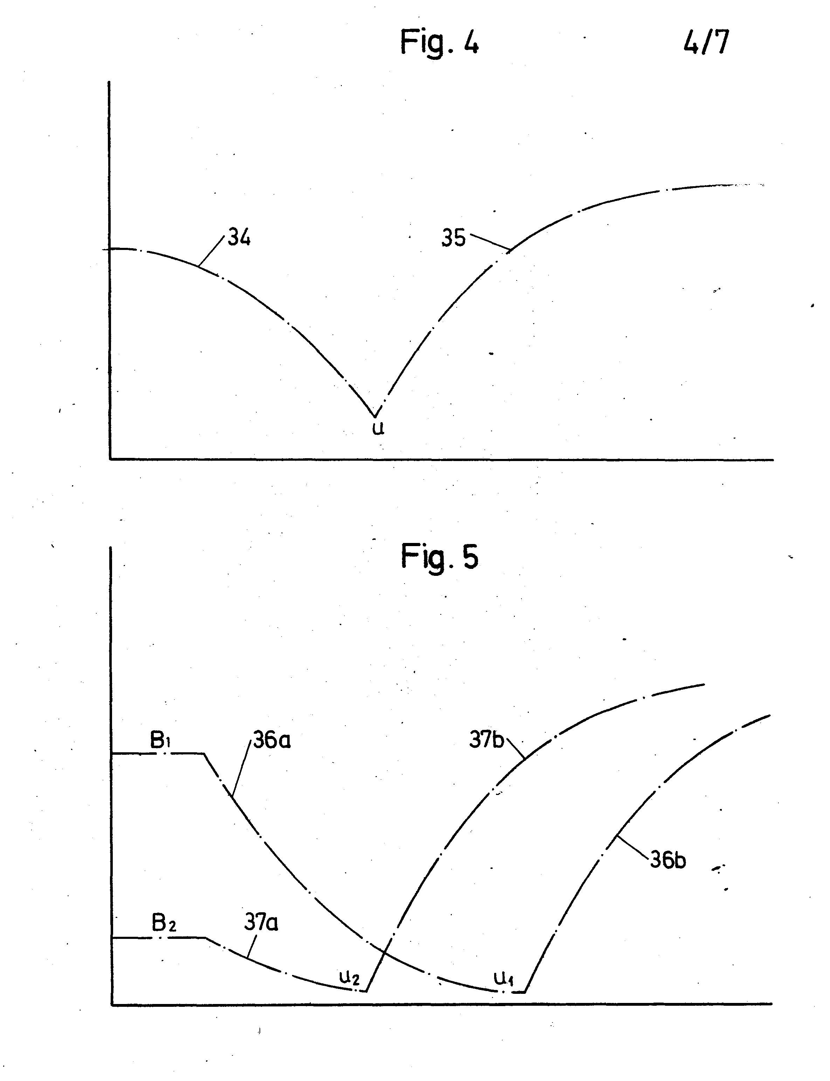

Um eine der möglichen Arbeitsweisen der Meßeinrichtung nach Fig. 3 näher beschreiben zu können, wird des besseren Verständnisses wegen auf die Arbeitsweise der Meßeinrichtung gemäß Fig. 2 zurückgegriffen. Vermindert sich dort aus irgendwelchen Gründen - z.B. durch Verdunsten des Feuchtmittelfilms infolge höherer Temperaturen - die Feuchtfilmdicke, so nimmt das die Feuchtfilmdicke anzeigende Meßsignal z.B. nach der Kurve 34 in Fig. 4 ab. Vermindert sich dabei der Feuchtfilm in seiner Dicke zu stark, d.h. bis zu einer kritischen Schwelle, so beginnt die Offsetplatte zu tonen. Gleichzeitig bekommt die Meßwalze 14 über die Feuchtauftragwalze 11 und die Farbauftragwalze 12 Farbe zugeführt. Das Meßsignal steigt wieder an, z.B. mit einem Verlauf nach Kurve 35 der Fig. 4. Der Kurvenzug 34, 35 zeigt einen Umschlagpunkt. Praktische Versuche haben gezeigt, daß zeitlich der Umschlagpunkt mit dem Beginn des Tonens auf der Offsetplatte übereinstimmt bzw. sogar vor diesem

- 13 -

liegt. Das Wiederansteigen des Meßsignals nach Kurve 35 könnte zu einer Fehlinterpretation in Bezug auf eine wieder ansteigende Feuchtfilmdicke führen, wenn nicht gleichzeitig der Fototransistor 21 (Fig.2) über den Verstärker 29 im Anzeigegerät 20 das Vorhandensein von Farbe, also Tonen. melden würde.

Einen ähnlichen Meßsignalkurvenverlauf erhält man, wenn in der Ausführungsform gemäß Fig. 3 die Meßwalze 14 von der zweiten Feuchtauftragwalze 11 zur ersten Farbauftragwalze 12 überwechselt. Auch dann wird ein vom Anzeigegerät 28 angezeigter Umschlagpunkt U. ähnlich Fig. 4, durchlaufen (s.Fig. 5).

Unmittelbar nach der Anlage der Meßwalze an die Farbwalze zeigt das Meßsignal noch den Beharrungszustand $B_1$ des Feuchtfilms an. den dieser bei der Anlage der Meßwalze an die Feuchtwalze hatte. Nun setzt sofort der Feuchtfilmabbau auf der Meßwalze ein, etwa gemäß einer Kurve 36a in Fig. 5, bis der Umschlagpunkt $U_1$ erreicht ist. Je dicker der Feuchtfilm auf der Meßwalze 14, desto länger dauert es, bis der Umschlagpunkt U erreicht ist, d.h. bis die Einfärbung der Meßwalze beginnt und das Signal wieder nach Kurve 36 b ansteigt.

Die Meßsignalkurve 36, vom Beharrungszustand $B_1$ ausgehend bis zum Umschlagpunkt $U_1$, zeigt einen stärkeren Flüssigkeitsfilm an als die Kurve 37, die von einem angenommenen Beharrungszustand $B_2$ eines schwächeren Feuchtfilms ausgeht und bei $U_2$ den Umschlagpunkt erreicht. Es wird deutlich, daß nicht nur die Ordinaten $B_1$ bzw. $B_2$ ein Maß für die Feuchtfilmdicke darstellen, sondern auch die Zeit, die bis zum Erreichen des Umschlagpunktes verstreicht. Die Zeitspanne, die vom Zeitpunkt des Anlegens der Meßwalze an die Farbwalze (Umschalt-

- 14 -

zeitpunkt) bis zum Umschlagpunkt U vergeht, ist ein Maß für die Feuchtmittelfilmdicke, die zum Umschaltzeitpunkt vorlag.

Die oben erwähnte Zeitspanne wird in geeigneter Weise mittels des Anzeigegerätes 28 zur Anzeige gebracht. Beispielsweise kann die Zahl der
Meßwalzenumdrehungen vom Umschaltzeitpunkt, d.h. vom Wechsel der
Meßwalze 14 von der Feuchtauftragwalze 11 zur Farbauftragwalze 12
oder umgekehrt, bis zum Umschlagpunkt U angezeigt werden. Es besteht
aber auch die Möglichkeit, den Differentialquotienten des Meßsignals der
Meßeinrichtung in den Wechselphasen der Messung von Feuchtmittel zu
Farbe und von Farbe zu Feuchtmittel anzuzeigen.

Wie zuvor angedeutet, unterbricht der Kanal 33 in der Mantelfläche der
Meßwalze 14 bei jeder Umdrehung das Meßsignal kurzzeitig und setzt
einen Peak.

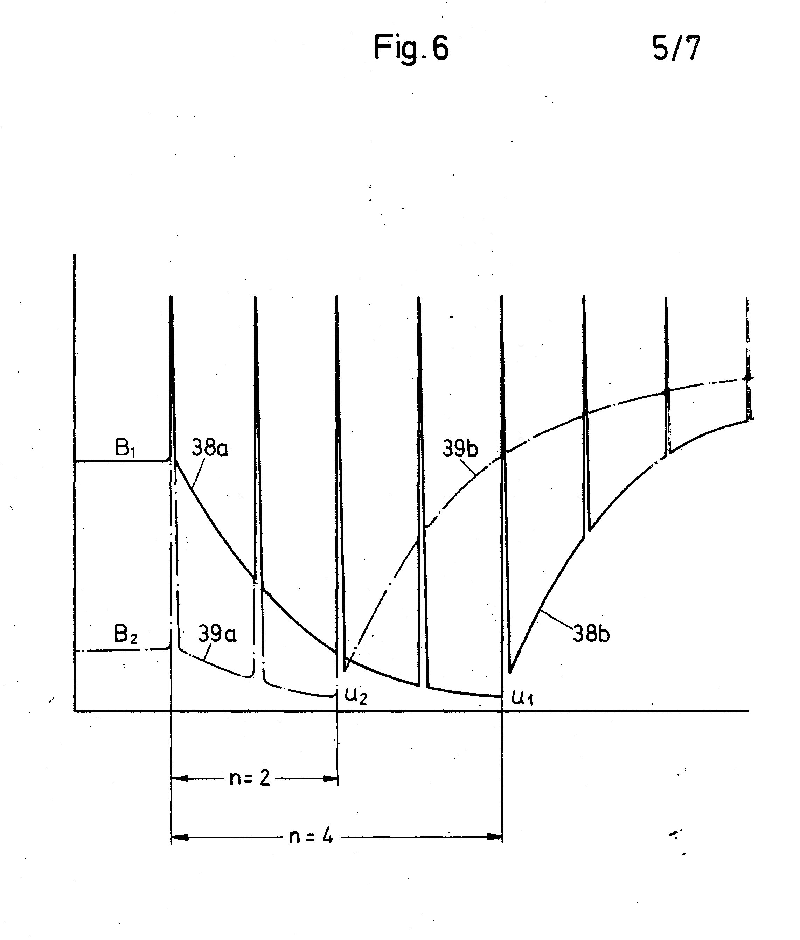

Zeichnet man das Meßsignal mittels eines als Registriergerät ausgebildeten Anzeigegerätes 28 auf, so entstehen Meßsignalkurven gemäß Fig. 6.

In Meßsignalkurve 38a, b sind vier Peaks bis kurz nach Beginn des Einfärbens verzeichnet, in Meßsignalkurve 39a, b nur zwei Peaks entsprechend der Zahl der Umdrehungen der Meßwalze bis zum Erreichen des
Umschlagpunktes. Die Anzahl der Peaks bis zum Erreichen des Umschlagpunktes ist somit eine Maßzahl für die Ausgangsstärke des Feuchtmittelfilms.

Es ist in diesem Zusammenhang ausdrücklich erwähnt, daß der Beginn
der Einfärbung der Meßwalze 14 hierbei nicht identisch ist mit dem Beginn des Tonens auf der Platte, wodurch sich die Anordnung der Meß-

- 15 -

walze 14 nach Fig. 3 von der nach Fig. 2 wesentlich unterscheidet. Bei der Anlage der Meßwalze 14 an der Farbauftragwalze 12 ist die Versorgung der Meßwalze mit Feuchtmittel unterbrochen, nicht dagegen die Versorgung der Offsetplatte, die ungestört weiter stattfindet.

Der Abbau der Feuchtmittelschicht von der hydrophilen Meßwalze nach Anlage an die Farbwalze vollzieht sich durch fortwährende Spaltung des Wasserfilms, wird also von der vorhandenen Farbschichtstärke kaum beeinflußt.

Beim Zurückschwenken der bis zur Sättigung eingefärben Meßwalze ‚B 10, B 20 bzw. B 30 (Farbfilmdicke auf der Meßwalze annähernd gleich der Farbfilmdicke auf der Farbwalze) an die an sich oleophile Feuchtauftragwalze wird der auf der Meßwalze verbliebene Farbfilm von der Feuchtauftragwalze abgeführt. Durch den sich ständig erneuernden Feuchtfilm auf der Feuchtauftragwalze wird die Meßwalze vollständig mit Feuchtmittel benetzt. Hier ist das Verhältnis der jeweiligen Schichtstärken zueinander ein Maß dafür, welche Zeit vergeht, bis die Meßwalze frei von Farbe wird, sich also der Umschlagpunkt einstellt, bzw. ein Fototransistor das Verschwinden der Farbe anzeigt, wenn ein solcher ähnlich Fig. 2 in die Einrichtung nach Fig. 3 eingebaut wird.

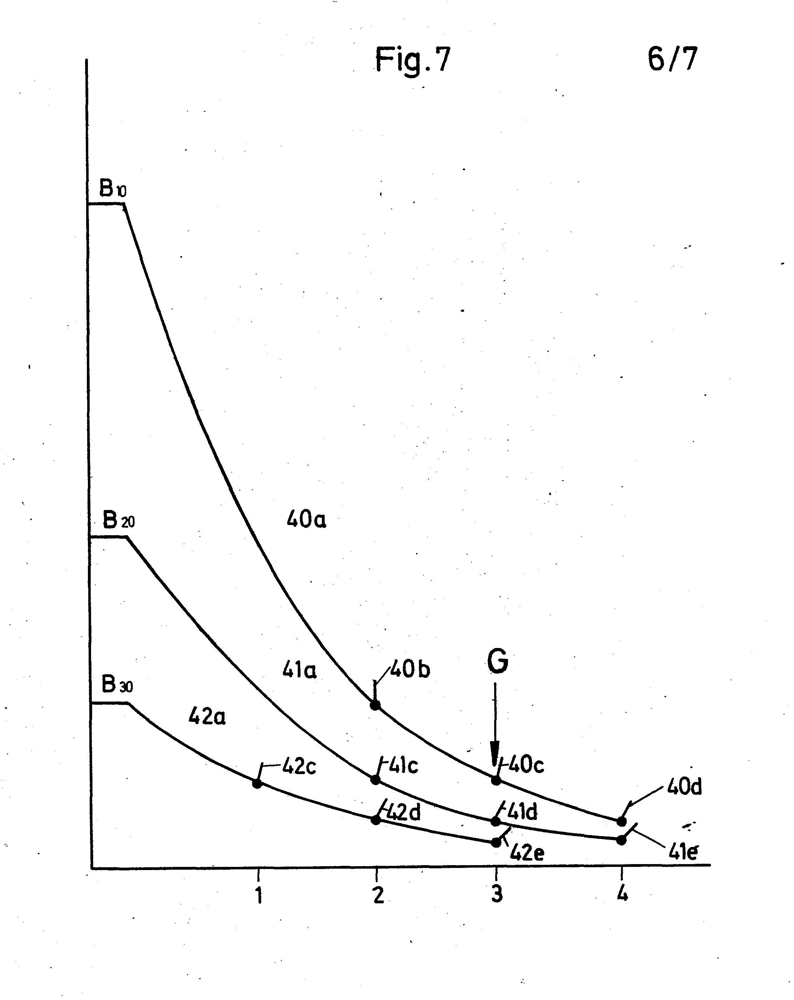

‚40, 41, 42, Fig. 7 zeigt die Meßsignalkurven für drei verschiedene Farbschichtdicken an der Meßwalze nach Schwenken der Meßwalze von der Farbwalze an die Feuchtwalze. Je nach vorhandener Feuchtfilmdicke auf der Feuchtwalze wird der Umschlagpunkt früher oder später eintreten. (Die Peaks sind der Übersichtlichkeit wegen in Fig. 7 weggelassen).

Die Umschlagpunkte sind durch die Kurvenansätze mit den Indizes b, c und d gekennzeichnet. Die Steigung, mit denen diese Kurvenansätze

- 16 -

beginnen, ist ein Maß für die auf der Feuchtauftragwalze vorhandene Feuchtfilmstärke, die sich nach dem Freilaufen von Farbe auf der Meßwalze im Beharrungszustand später einstellt. Bei konstantem Farbfeuchtmittel-Mengenverhältnis stellt sich der Umschlagpunkt zur gleichen Zeit ein, der einmal ermittelt, für die betreffende Farbe, Feuchtmittel und Art der Platte, das Optimum der Farb-Wasser-Führung darstellt. In Fig. 7 ist dieser Zeitpunkt durch den Pfeil "G" (Gleichgewicht) gekennzeichnet.

Wird zu wenig Farbe geführt (z.B. Kurve 42 ), so tritt der Umschlag mit den Feuchtmittelstärken entsprechend 42c und 42d früher ein als erwünscht. Erst eine Verminderung der Feuchtführung auf eine Filmstärke gemäß 42e führt das richtige Gleichgewicht herbei. Wird diese Korrektur nicht durchgeführt, wird die Platte zuviel Wasser führen und z.B. Wassernasen im Druckbild zeigen.

Wird zu viel Farbe geführt, z.B. Umschlagpunkt bei 40d, so muß entweder Farbe weggenommen - neuer Umschlagpunkt bei 41d stellt sich ein - oder Wasser zugeführt werden, der Umschlagpunkt wäre dann 40c.

Allgemein heißt das:

Ist das Gleichgewicht durch Verschiebung in Richtung auf zu viel Feuchtmittel gestört, tritt der Umschlagpunkt vorzeitig ein, bei zu viel Farbe verspätet.

In Fig. 7 ist angedeutet, mit welcher Intensität der Wiederaufbau des Feuchtmittelfilms stattfindet. Gleiche Indizes bedeuten gleiche Intensität und damit auch gleiche Feuchtfilmdicken für den Zustand der Be-

- 17 -

harrung. Die Messung des Anstiegs liefert über die Zeitkonstante die endgültige Feuchtfilmstärke. Dies gilt übrigens auch für den Farbfilmaufbau an der Meßwalze, wenn diese an der Farbauftragwalze anliegt.

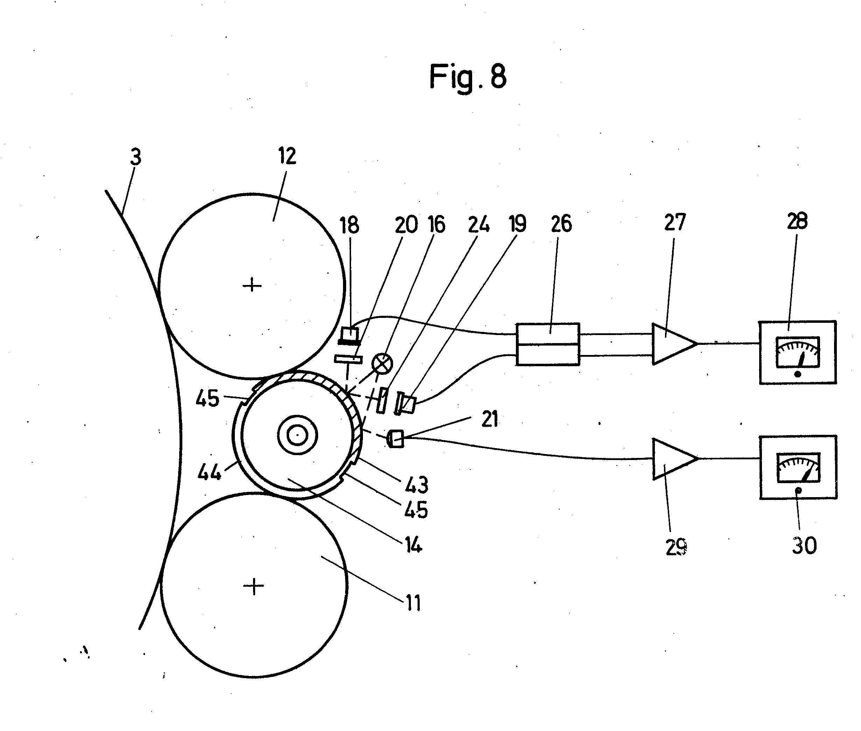

Eine dritte Ausgestaltung der Erfindung zeigt Fig. 8. Die Meßwalze 14 ist hier je zur Hälfte ihres Umfangs mit einem oleophilen Mantelflächenteil 43 und einem hydrophilen Mantelflächenteil 44 versehen. Die beiden Mantelflächenteile 43 und 44 sind durch zwei Kanäle 45 voneinander getrennt. Der oleophile Mantelflächenteil 43 kann beispielsweise aus Kupfer, der hydrophile aus Chrom bestehen. Zur Messung der Filmdicke auf der Mantelfläche der Meßwalze 14 muß daher das Auflichtverfahren Anwendung finden. Der nur schematisch in Fig. 8 angeordnete Meßkopf enthält die Strahlungsquelle 16, die Infrarotdetektoren 18 und 19 mit den ihnen zugeordneten Filtern 20 und 24 sowie den Fototransistor 21. Zwecks Anzeige der Meßsignale der Infrarotdetektoren 18 und 19 sind wieder Impedanzwandler 26, Rechenverstärker 27 und Anzeigegerät 28 vorgesehen. Der Fototransistor 21 ist in derselben Weise wie bei der Ausführung gemäß Fig. 2 elektrisch über den Verstärker 29 mit dem Anzeigegerät 30 für die Farbfilmdickenanzeige verbunden.

Die Meßwalze 14 liegt in ihrer Arbeitsstellung gleichzeitig sowohl an der zweiten Feuchtauftragwalze 11 als auch an der ersten Farbauftragwalze 12 ständig an. Der oleophile Mantelflächenteil 43 der Meßwalze 14 nimmt nur Farbe von der Farbauftragwalze 12 und der hydrophile Mantelflächenteil 44 nur Feuchtmittel von der Feuchtauftragwalze 11 an, obwohl beide Meßflächenhälften nacheinander beide Auftragwalzen berühren. Bei Vorbeilauf der oleophilen Mantelfläche 43 ist der Fototransistor 21 und bei Vorbeilauf der hydrophilen Mantelfläche 44 sind die Infrarotdetektoren 18 und 19

- 18 -

eingeschaltet. Das Anzeigegerät 28 zeigt somit eine der zweiten Feuchtauftragwalze 11 entsprechende Feuchtfilmdicke an, während das Anzeigegerät 30 eine der Farbauftragwalze entsprechende Farbfilmdicke zur Anzeige bringt.

Der die Feuchtung und Farbgebung steuernde Drucker hat somit einen Meßwert, der das tatsächlich auf der Platte vorhandene Feucht-Farbverhältnis in sehr guter Weise wiedergibt, denn die Meßwalze 14 liegt in gleicher Weise wie die Offsetplatte an den Walzen des Feucht- und Farbwerkes an. Der Drucker kann nun das von ihm als optimal ermittelte Feucht-Farbgleichgewicht einfach einregeln. Es besteht außerdem die Möglichkeit, die Meßsignale der Infrarotdetektoren 18 und 19 sowie des Fototransistors 21 zur automatischen Einregelung des Feucht-Farbgleichgewichtes auszunutzen.

-19-

## TEILELISTE

1   Gegendruckzylinder

2   Gummituchzylinder

3   Plattenzylinder

4   Feuchtwerk

5   Farbwerk

6   Feuchtmittelbehälter

7   Feuchtduktor

8   Feuchtheber

9   Feuchtreiber

10   1. Feuchtauftragwalze

11   2. Feuchtauftragwalze

12   Farbauftragwalze

13   Meßkopf

14   Meßwalze

15   Drehachsen

16   Strahlungsquelle

17   Gehäuse

18   IR-Detektor für Meßstrahl

19   IR-Detektor für Vergleichsstrahl

20   Filter für Meß- und Vergleichsstrahl

21   Fototransistor zur Farbbestimmung

22   obere Blende

23   untere Blende

- 20 -

24  Filter für Vergleichsstrahl

25

26  Impedanzwandler für IR-Detektoren

27  Rechenverstärker

28  Anzeigevorrichtung für Feuchtfilmdicke

29  Verstärker für Farbsignal

30  Anzeigevorrichtung für Farbe

31  Schwenkhebel

32  Schwenkachse

33  Kanal

34  Meßsignalkurve

35        "

36        "

37        "

38        "

39        "

40        "

41        "

42        "

43  oleophiler Mantelflächenbereich

44  hydrophiler Mantelflächenbereich

45  Kanäle

HEIDELBERGER DRUCKMASCHINEN / A-270     0000689     9. August 1977
AKTIENGESELLSCHAFT

-1-

Titel: "Vorrichtung und Verfahren zur Überwachung des Feucht-
und Farbgleichgewichts bei Offsetdruckwerken"

ANSPRÜCHE

1. Vorrichtung zur Messung des Feucht- und Farbgleichgewichts bei
Offsetdruckwerken mit einer im Feucht- bzw. einer im Farbfilmstrom
liegenden Meßwalze, deren Flüssigkeitsfilm gemessen wird, d a -
d u r c h   g e k e n n z e i c h n e t ,   daß nur eine Meßwalze (14)
vorgesehen ist, die an eine der Feuchtauftragwalzen (11) und an eine
der Farbauftragwalzen (12) anstellbar ist, und daß zumindest bestimmte Bereiche der Mantelfläche der Meßwalze (14) hydrophil ausgebildet
sind.

2. Vorrichtung nach Anspruch 1,  d a d u r c h   g e k e n n z e i c h n e t ,
daß die Meßwalze (14) gleichzeitig an einer farbführenden und an einer
feuchtmittelführenden Walze (11, 12) anliegt und daß die Meßwalze (14)
selbst aus Glas hergestellt ist.

3. Vorrichtung nach Anspruch 1,  d a d u r c h   g e k e n n z e i c h n e t ,
daß die Meßwalze (14) verschwenkbar gelagert ist und alternierend
an der letzten Feuchtauftragwalze (11) sowie der ersten Farbauftragwalze (12) anliegt, und daß die Mantelfläche der Meßwalze (14) durch
einen in axialer Richtung verlaufenden, nicht benetzbaren Bereich,

z.B. einen Kanal (33) unterbrochen ist.

4. Vorrichtung nach Anspruch 1, d a d u r c h   g e k e n n z e i c h n e t ,
daß die Mantelfläche der Meßwalze (14) hydrophile und oleophile
Bereiche (43, 44) aufweist.

5. Vorrichtung nach Anspruch 4, d a d u r c h   g e k e n n z e i c h n e t ,
daß. in Umfangsrichtung gesehen. die Mantelfläche der Meßwalze (14)
je zur Hälfte aus hydrophilem und oleophilem Material besteht.

6. Vorrichtung nach Anspruch 4 oder 5, d a d u r c h   g e k e n n z e i c h -
n e t , daß der hydrophile Bereich (44) der Mantelfläche der Meßwalze
von dem oleophilen (43) durch Kanäle (45) getrennt ist.

7. Verfahren zur Messung des Feucht- und Farbfilmgleichgewichts bei
Offsetdruckwerken mit einer Vorrichtung nach Anspruch 2, d a -
d u r c h   g e k e n n z e i c h n e t ,   daß von einer in einer gläsernen
Meßwalze (14) vorgesehenen Strahlungsquelle (16) zwei Infrarotdetektoren (18, 19) und ein Fototransistor (21) beaufschlagt werden, wobei
die Infrarotdetektoren (18, 19) die Feuchtfilmdicke und der Fototransistor (21) den Farbschichtanteil in der Flüssigkeitsschicht auf
der Meßwalzenmantelfläche ermittelt.

8. Verfahren zur Messung der Abweichungen der Feucht- und Farbfilmdicke bei Offsetdruckwerken mit einer Vorrichtung nach Anspruch 3,
d a d u r c h   g e k e n n z e i c h n e t ,   daß Meßsignale.in Form einer
Kurve (34 - 42) aufgezeichnet werden, die den Abtragungsverlauf
von Farbe durch Feuchtmittel oder umgekehrt auf der Mantelfläche
der Meßwalze (14) anzeigen,  und daß der nicht benetzbare

- 3 -

Teil (33) der Mantelfläche die Kurve des Abtragungsverlaufs bei
jeder Umdrehung der Meßwalze (14) unterbricht. so daß die Anz.
der Unterbrechungen bis zur völligen Entfernung der Farbe oder
des Feuchtmittels ein Maß für die Farb- bzw. Feuchtfilmdick a
der jeweiligen Auftragwalze darstellen.

9. Verfahren nach Anspruch 8, d a d u r c h  g e k e n n z e i c h n e t,
daß die Zahl der Meßwalzenumdrehungen vom Umschaltzeitpunkt, d. h.
vom Wechsel der Meßwalze (14) von der Feuchtauftragwalze (11) zur
Farbauftragwalze (12) oder umgekehrt. bis zum Umschlagpunkt (U)
angezeigt wird.

10. Verfahren nach Anspruch 8, d a d u r c h  g e k e n n z e i c h n e t,
daß der Differentialquotient des Meßsignals der Meßeinrichtung in den
Wechselphasen der Messung von Feuchtmittel zu Farbe und von Farbe
zu Feuchtmittel angezeigt wird.

11. Verfahren zur Messung der Abweichungen der Feucht- und Farbfilmdicke
bei Offsetdruckwerken mit einer Vorrichtung nach einem oder mehreren
der Ansprüche 4 bis 6, d a d u r c h  g e k e n n z e i c h n e t, daß
mittels reflektierter Strahlen mit Hilfe von Infrarotdetektoren (18, 19)
auf dem hydrophilen Mantelflächenbereich (44) der Meßwalze (14) die
Feuchtfilmdicke und mit Hilfe eines Fototransistors (21) auf dem
oleophilen Mantelflächenbereich (43) die Farbfilmdicke gemessen wird.

## Fig. 1

Fig. 2

Fig. 3

## Fig. 4

## Fig. 5

**Fig. 7**

# Fig. 8

7/7

Europäisches
Patentamt

**EUROPÄISCHER RECHERCHENBERICHT**

0000689

Nummer der Anmeldung

EP 78 10 0108

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | GB - A - 1 289 049 (CHURCHILL INSTRUMENT)<br>* Die ganze Beschreibung *<br>-- | 1 |
| A | FR - A - 2 198 840 (VICKERS)<br>* Seite 7, Zeilen 4-18; Figur 1 *<br>-- | 1 |
| A | US - A - 3 870 884 (INFRA SYSTEMS)<br>* Die ganze Beschreibung *<br>----- | 1 |

**KLASSIFIKATION DER ANMELDUNG (Int.Cl.³)**

B 41 F 33/00
C 01 B 11/06

**RECHERCHIERTE SACHGEBIETE (Int.Cl.³)**

B 41 F 33/00
B 41 F 31/00
C 01 B 11/06

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23-10-1978 | LONCKE |

EPA form 1503.1 06.78